# EUROPEAN PATENT APPLICATION

(11) **EP 1 719 408 A1**
(43) Date of publication of application: **08.11.2006**
(21) Application number: 06380049.4
(22) Date of filing: 14.03.2006
(51) Int. Cl.: A01K 89/016

(54) **Fishing reel**

(30) Priority: 14.03.2005 ES 200500585 U
(71) Applicant: Saenz De Ormijana, Alejandro Marco, 01194 Berrosteguieta, Alava (ES)
(72) Inventor: Saenz De Ormijana, Alejandro Marco, 01194 Berrosteguieta, Alava (ES)
(74) Representative: Carvajal y Urquijo, Isabel

(57) **Abstract**

The present invention relates to a fishing reel, consisting of a main body (1) supporting a spool (9) and joined to an element (8) for fixing it to the reel-holder of the rod. The body (1) comprises: two vertical branches (11, 12) joined at their mid-portions by a horizontal branch (13), each one of the ends of the vertical branches (11,12) having an external bearing (2); a bar (3) projecting from the side of the support, and internally housing a tubular passage (31) delimiting two solid sections and housing, shifting inside it, an L-shaped line guide (4) provided with at least three internally threaded drill holes (42,43,44) at its larger branch, and side stops (41) at its smaller branch, and an axis (5) at one of its ends provided with a bearing (6), and a stud (51) at the other end which is screwed into one of the drill holes (42,43,44).

## Description

### Object of the Invention

The present invention relates to a fishing reel to be used in fly fishing.

### Background of the Invention

Unlike other methods of fishing with a rod, fly fishing is distinguished by using a line that is wound on a spool for the purpose of casting the bait, either an insect, for example a fly, or a lure that imitates it. The line used in this type of fishing may be lighter (line 1) or heavier (line 12). This method also includes a fundamental element, the reel, which is fixed to the fishing rod and the spool being supported thereon.

Among current reel models there are those made up of a cover, a spool and internal bearings, and those which, in addition to the foregoing, have a flange system. In the latter type, the system loses pressure over time and makes the line shake.

However, they have as a drawback the fact that if they want to maintain the same metering for a type of line of greater thickness, they would have to have a smaller central axis, and therefore the user would be forced to wind it more to take up the line. Furthermore, current models are limited by the volume of the spool.

### Description of the Invention

The present invention provides a fishing reel having the following advantages: the possibility of changing the line (fishing line) number according to the type of fish; changing the diameter of the spool to be used, and therefore using more backing line. While at the same time allowing the introduction of a larger spool, the invention achieves maintaining a constant take-up speed. On the other hand, the removal of the spool is done more comfortably.

Another advantage achieved with the reel herein described is that the system of fastening the spool by means of the bearings provided in its main body provides greater security, greater stability and less slack in the side shifts of the spool than those currently provided by traditional systems.

On the other hand, since the reel of the invention does not have a box covering the spool, it has a lighter weight and allows manually accessing the edges of the spool in order to stop it.

To achieve these advantages, the object of the present invention will be described below.

The reel consists of a main body acting as a support for the spool and is joined to an element responsible for fixing it to the reel-holder of the rod.

The main body is one piece comprising: two arched vertical branches which are joined at their mid-portions by a horizontal branch, each one of the ends of the vertical branches having an external bearing that is finished on the side with a concentric ridge; a bar projecting from the side of the support, extending in the direction opposite to the element, perpendicularly, from the joining of one of the vertical branches with the horizontal branch, which bar is internally provided with a tubular passage delimiting two solid sections which are joined only at the visible edge of the free end of the bar, in which passage there is housed, being able to shift within it, an L-shaped line guide having on its larger branch at least three internally threaded drill holes and, on its smaller branch, side stops; an axis parallel to the horizontal branch which is provided with an internal bearing on one of its ends pressing against the inner wall of the spool, and on the other end, a stud that is sized for so as to screw it in one of the drill holes, and then in a manually operated nut for the purpose of locking the guide against the arm, and so that the external bearings and the inner bearing define an adjustable space, according to the outer and inner circumferences of the spool.

### Brief Description of the Drawings

Figure 1 depicts the side and rear views of the main body of the reel of the invention.
Figure 2 depicts a top view of the reel of the invention, which shows the main body and other constituent parts.

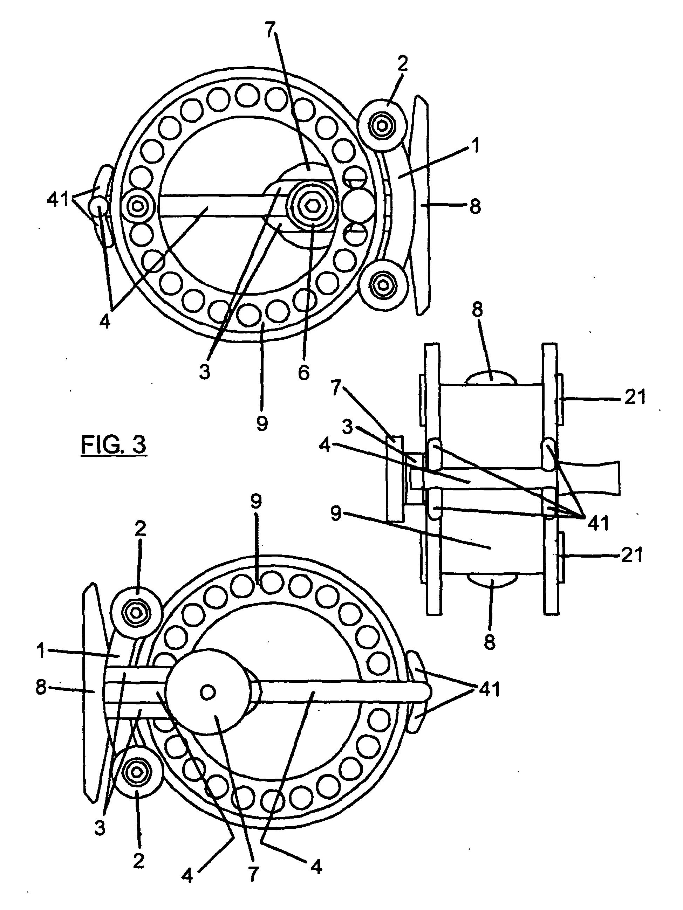

Figure 3 depicts a view of the spool-reel assembly.

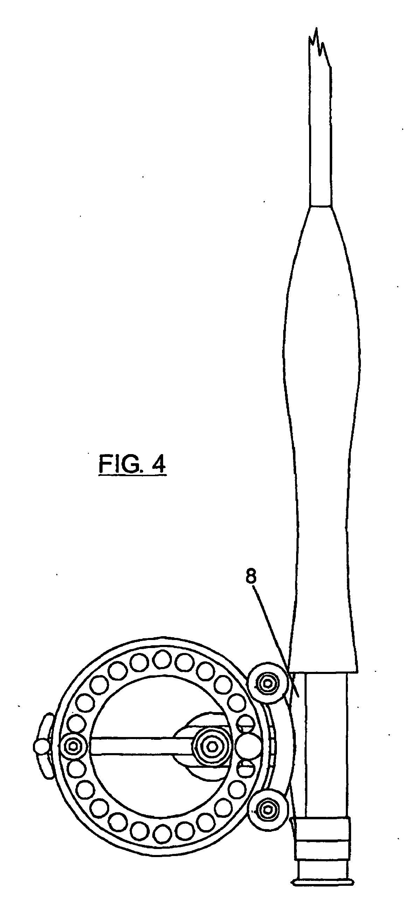

Figure 4 depicts a view of the spool-reel-fishing rod assembly.

### Preferred Embodiment of the Invention

The invention will now be described, only by way of illustration, and by no means should it be considered to be limiting of the scope of the invention.

The main body (1) of the reel of the invention is structured as an H-shaped part from two arched vertical branches (11,12) connected to one another by means of a horizontal branch (13) at the portion of maximum curvature. An element (8) is screwed to the support (1) and is responsible for fixing it to the reel-holder of the fishing rod.

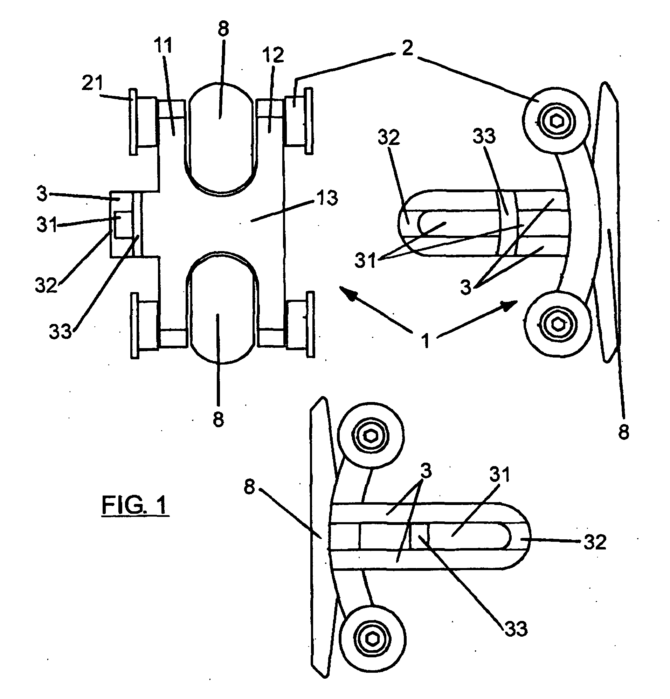

As shown in Figure 1, a bar (3) projects from one side of the main body (1), i.e. from where one of its vertical branches (11,12) and the horizontal branch (13) are joined together. This bar projects in the direction opposite to the element (8).

Each one of the ends of the vertical branches (11,12) is provided with an external bearing (2) with a perimetric surface allowing the support and bearing of the outer circumference of the spool (9). This bearing (2) is finished on one of its sides in a concentric ridge (21) of greater diameter. The side shift of the spool (9) will thus be prevented when it turns. Therefore, the external bearings (2) arranged on each one of the vertical branches (11,12) configure imaginary arches, the curvatures of which coincide with the perimeter of the spool (9).

Arm (3) is configured so that a line guide (4) may be housed and horizontally shift therein. The arm (3) is a body which is internally provided with a tubular passage (31), which passage delimits two solid sections. Said solid sections are connected at the free end of the arm, only at the visible side thereof. The free end of the arm (3) has a rounded finish.

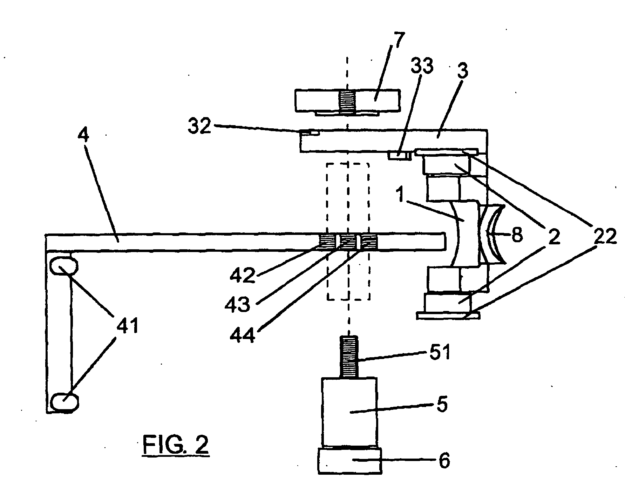

The passage (31) houses the line guide (4), which is L-shaped, as can be seen in Figure 2. In said guide, the larger branch is rectangular and the smaller one is cylindrical, the latter one having tabs (41) acting as side stops. The longer side is provided with three internally threaded drill holes (42,43,44). One of the drill hoses is close to the free edge of the guide (4).

The main body (1) also comprises an axis (5) which is provided on one of its ends with an internal bearing (6) and projecting from the other side it is provided with a threaded stud (51). Said stud is sized for its insertion and screwing into one of the drill holes (41,42,43). Bearing (6) is located in parallel to the horizontal branch and exerts pressure on the wall of the inner hole of the spool.

Body (1) further has a hand nut (7) for tightening axis (5) against bar (3), thus blocking the integral axis (5) - line guide (4) assembly. If the hand nut (7) is loosened, the integral axis - line guide assembly can slide. The distance between the smaller branch of the guide (4) and the internal bearing (6) can thus be changed, depending on the outer diameter of the spool (9) that is going to be used.

According to the present invention, if a spool with a smaller diameter is used, the threaded stud (51) projecting from axis (5), provided with internal bearing (6), would be inserted in the drill hole (42) closest to the horizontal branch of the support (1).

When a spool with a larger diameter is used, the stud (51) would be inserted in the drill hole (44) farthest from said branch. The diameter of the spool can thus be increased without needing to reduce the diameter on which the line is wound in order for it to have greater capacity. Nevertheless, different spools can be used in a single drill hole.

## Claims

1. A fishing reel, of the type consisting of a main body (1) supporting a spool (9) and joined to an element (8) responsible for fixing it to the reel-holder of the rod, **characterized in that** the body (1) comprises: two arched vertical branches (11,12) joined at their mid-portions by a horizontal branch (13), each one of the ends of the vertical branches (11,12) having an external bearing (2) that is finished on the side in a concentric ridge (21); a bar (3) projecting from the side of the support, projecting in opposition to element (8), from the joining of one of the vertical branches with the horizontal branch (13), which bar (3) internally houses a tubular passage (31) delimiting two solid sections joined only at the visible edge (32) of the free end of the bar (3), which passage (31) houses, shifting inside it, an L-shaped line guide (4) provided with at least three internally threaded drill holes (42,43,44) at its larger branch, and side stops (41) at its smaller branch; an axis (5) which is provided, at one of its ends, with an internal bearing (6) which exerts pressure against the internal wall of the spool (9), and, at the other end, a stud (51) sized for screwing it into one of the drill holes (42,43,44), and then a manually operated nut (7) for the purpose of locking the guide (4) against the arm (3), and **in that** the external bearings (2) and internal bearing (6) define an adjustable space, according to the outer and inner circumferences of the spool.
